# EUROPEAN PATENT SPECIFICATION

(11) **EP 2 757 208 B1**
(45) Date of publication and mention of the grant of the patent: **13.05.2015**
(21) Application number: 14150437.3
(22) Date of filing: 08.01.2014
(51) Int. Cl.: E04B 1/76, E04D 13/16, D04H 1/74, D04H 1/4218

(54) **Method for producing, transporting and installing insulating lamellae of mineral wool**
Verfahren zur Herstellung, Transport und Installation isolierender Lamellen von Mineralwolle
Procédé de production, transport et d'installation de lamelles d'isolation de laine minérale

(30) Priority: 16.01.2013 FI 20135049
(43) Date of publication of application: 23.07.2014
(73) Proprietor: Paroc Group Oy, 00180 Helsinki (FI)
(72) Inventor: Fagerlund, Johanna, 21600 Parainen (FI); Rantala, Kimmo, 21600 Parainen (FI); Walli, Mats, 20780 Kaarina (FI)
(74) Representative: LEITZINGER OY

(56) References cited:
- US-A1- 2003 183 055
- US-A1- 2005 161 486

## Description

The object of the present invention is a method for producing, transporting and installing insulating lamellae of mineral wool, in accordance with the preamble of the independent claim 1.

Insulating lamellae made of mineral wool are used, among others, in the thermal insulation structures of roofs, where the lamellae are typically installed as a single-layer insulation layer in which the mineral wool fibres of the lamellae are directed essentially perpendicularly to the two main surfaces of the insulation layer. The insulation layer is fixed by one of its main surfaces to the load-bearing roof structure through the vapour barrier installed to it without mechanical fasteners passing through the vapour barrier. The load-bearing roof structure may be, for example, a concrete base or profiled sheet with plywood installed on top of it, to which plywood installed on the concrete base or profiled sheet is fixed the vapour barrier. The vapour barrier comprises, for example, an adherable bitumen membrane, which is fixed to the load-bearing roof construction by adhering with hot bitumen. On the upper main surface of the laminated thermal insulation layer may, in addition, be fixed a thin mineral wool board with mechanical fasteners in such a way that the mechanical fasteners of the board pass through it and extend, by anchoring to a certain depth in the layer consisting of mineral wool lamellae, in such a way that they will not pass through the vapour barrier on the other main surface of the lamellae layer. A lamella insulation roof can also be implemented with fasteners passing through the vapour barrier. A board possibly placed over the lamella insulation layer may also be fixed through the vapour barrier. When the board is fixed through the vapour barrier, separate lamella fixing is not normally used. Lamella insulations can be used also elsewhere than in roof constructions.

One problem with current lamella production processes is that the lamellae have to be cut to a certain minimum width in order to be able to convey them forward reliably on the processing line after cutting. If the lamellae are too narrow, they may fall in the slots between the conveyors. In addition, handling and moving individual lamellae, for example at the packing stage and installation site, is slower than with sheet-like products.

US 2003/183055 discloses a compression-cutting method for forming one or more longitudinally extending series of cuts and separable connectors in a fibrous insulation blanket. The series of cuts and connectors define blanket sections which are attached to one another by the connectors. Pre-cut blankets are transported to the site of use in full width. These pre-cut blanket sections are, however, not used as insulation lamellae turned by 90° with respect to the plane determined by the blanket but only for diminishing the width of the blanket, when necessary, by tearing one or more blanket sections from the full width blanket.

US 2003/183055 discloses the features of the preambul of claim 1.

The aim of the present invention is to provide a solution by means of which reliable handling of also narrower insulation lamellae than before is made possible in the production process. To achieve this aim, the method according to the invention is characterised by the features of the characterising part of the independent claim 1. The invention is described in greater detail in the following, with reference to the accompanying drawing, in which:
- Figure 1: shows a diagrammatic cross-section of a mineral wool insulation sheet cut according to a method implementing the invention,
- Figure 2: shows a diagrammatic top view of a section of the production line following the cutting stage, and
- Figure 3: shows a side view of the section of line show in Figure 2.

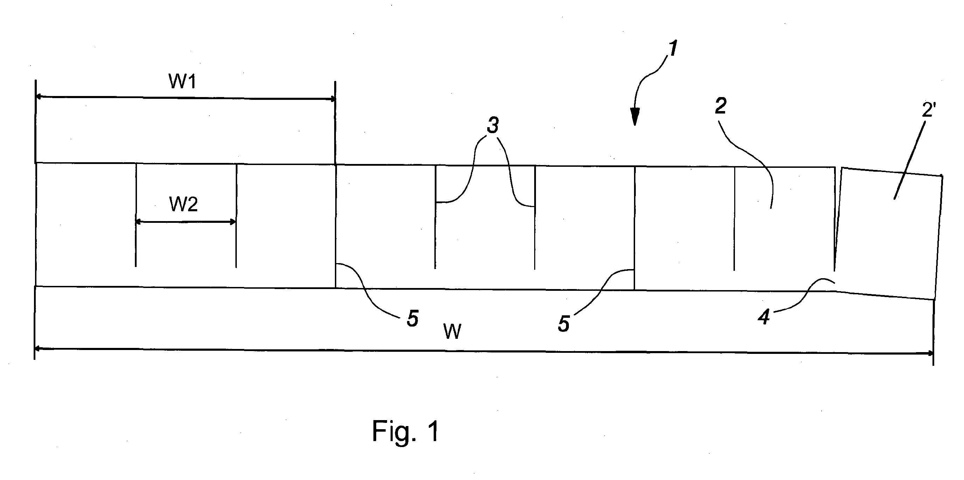

Figure 1 shows a cross-section of a mineral wool sheet 1 after the cutting forming the lamella parts 2. In this embodiment, there are nine lamella parts 2 divided into groups of three lamella parts, at the point 5 between which groups, the cutting is performed through the entire thickness of the sheet 1, whereas within the groups, the cuts 3 between adjacent lamellae are left incomplete in such a way that adjacent lamellae 2 are attached to one another by a thin neck 4. The lamella 2' on the right-hand side of the Figure is shown slightly opened at the cut 3 to show the neck 4 more clearly. Such groups of three lamellae, the width of which is indicated by reference marking W1, form a sheet-like entity, the overall width of which exceeds the minimum width required on the line even if the width of a single lamella W2 is considerably less than the minimum requirement. The overall width of the sheet is marked with reference marking W.

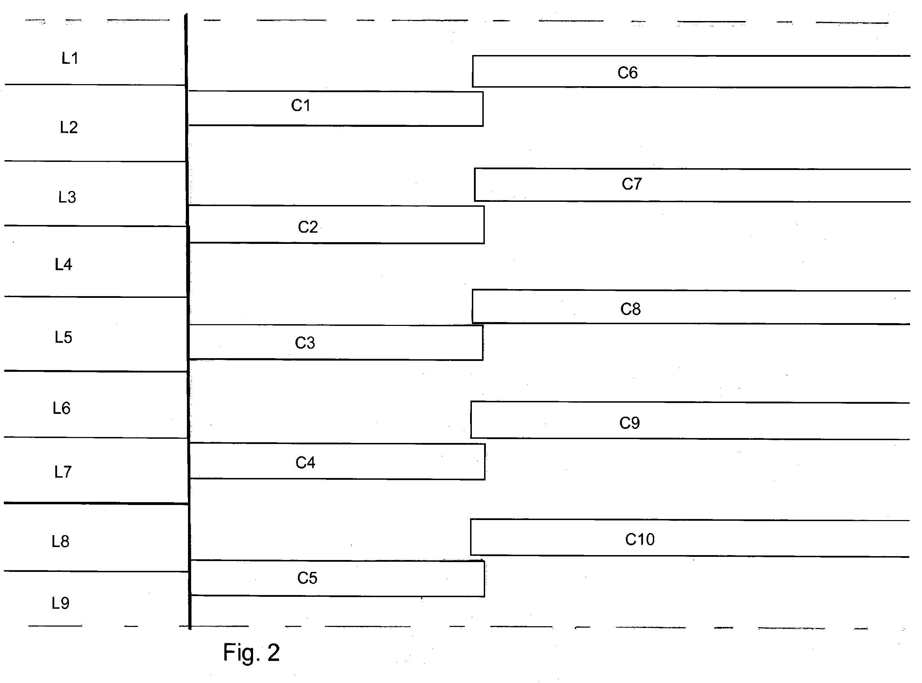

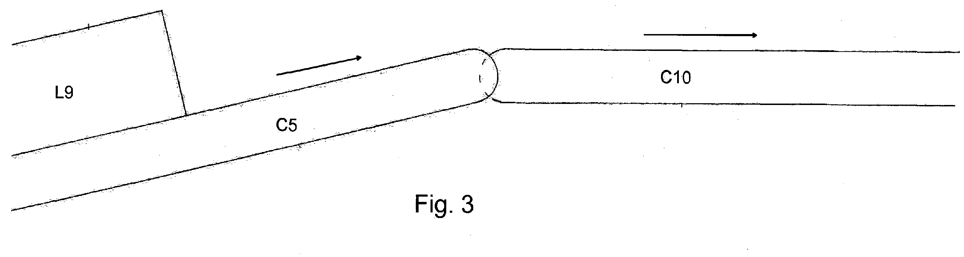

Figure 2 shows nine lamellae L1-L9, which are taken, after longitudinal cutting, to conveyors C1-C5 and C6-C10 extending in the longitudinal direction of the line which are at a transverse distance from one another. Figure 3 illustrates the mutual position of the conveyor groups C1-C5 and C6-C10 of Figure 2 as a side view. The transverse distance between two adjacent conveyors in each conveyor group C1-C5 and C6-C10 is dimensioned for a certain minimum width of the lamellae. If it is desirable to make lamellae narrower than this minimum width, the risk of the lamellae falling between the conveyors will become a problem. Figure 2 illustrates the positioning of such narrow lamellae on the conveyors after cutting. Should the lamellae L1-L9 be cut in the usual manner, detaching completely from one another already at the longitudinal cutting stage, lamella L2, for example, might be able to fall between conveyors C6 and C7, and lamella L3 in turn between conveyors C1 and C2. Similarly, lamella L4 might fall between conveyors C2 and C3, lamella L5 between conveyors C8 and C9, etc. By applying the partial cutting according to the invention in such a way that at least two of the lamellae are at each time attached to one another in such a way that their joint width is greater than the distance between the conveyors, falling between the conveyors and the interruptions in production caused by it are avoided in a relatively simple and reliable manner. The method according to the invention makes possible a flexible changeover to manufacturing lamellae of different sizes by changing on the line only the position of the cutting means in the transverse direction of the mineral wool sheets and their cutting depth in the mineral wool sheet. As cutting means may be used, for example, circular saw blades on a drive shaft extending transversely to the mineral wool sheet, the blades being placeable to different points in the longitudinal direction of the shaft, whereby depth adjustment is easily carried out by reducing the diameter of the blade at desired points. The rest of the line may thus remain essentially unchanged.

According to the invention, a sheet on the line may also be cut in such a way that all lamellae remain attached to one another and only trimming of the edges is carried out as a cut extending through the thickness of the entire sheet.

The lamella groups W1 are preferably conveyed all the way to the packing station by keeping the lamella parts attached to one another and are also packed in sheet-like form, in which case the lamella parts are not detached from one another until the package is unpacked. At the installation site, the lamella parts are turned 90° about their longitudinal axis, whereby their fibres settle in an essentially perpendicular position to their installation base. The lamellae can be detached from one another, for example, by cutting with a knife or simply by tearing them off one another. The tearing may leave uneven marks on the tearing point, but this is not harmful to the insulating capacity of the lamellae nor does it have an unfavourable effect on the final appearance of the insulation site.

## Claims

1. A method for producing, transporting and installing insulating lamellae of mineral wool, in which method is first produced a mineral wool sheet (1) or mat, and the sheet or mat is supplied to a production line, where, at a cutting stage, narrow lamella parts (2) are longitudinally cut from it, wherein the cutting between at least two adjacent lamella parts is carried out partially so that said at least two adjacent lamella parts remain attached to one another by a thin neck, which attached lamella parts are then conveyed to a packing stage by a conveying part, wherein the conveying part comprises conveyor means and at the cutting stage, the partial cutting between at least two adjacent lamella parts is carried out so that the attached lamella parts form a lamella unit, and the packed lamellae are subsequently conveyed to the site of use, **characterised in that** the fibres of the sheet or mat are mainly parallel with the main surfaces of the sheet;
the lamella parts correspond in width to the desired insulation thickness;
the lamellae are installed in the site of use turned by 90° with respect to the plane determined by the sheet or mat (1) in such a way that adjacently installed lamellae form an insulation layer, in which the fibres settle essentially perpendicularly to the plane formed by the main surfaces of the insulation layer;
the conveyor means (C1-C10) extending in the longitudinal direction of the production line at a transverse distance from one another; the width of the lamella units is greater than the transverse distance between two adjacent conveyor means (C1-C10), and the attached lamella parts are detached completely from one another before packing them, or not until close to the site of use, and are installed in place individually at the site of use.

2. The method of claim 1, **characterised in that** the cutting is carried out by a circular saw blades on a drive shaft extending transversely to the mineral wool sheet, the blades being placeable to different points in the longitudinal direction of the shaft.

3. The method of claim 2, **characterised in that**, the depth adjustment for each cut is carried out by changing the diameter of the corresponding blade.

## Patentansprüche

1. Verfahren zur Herstellung, zum Transport und zur Installation isolierender Lamellen aus Mineralwolle, wobei in dem Verfahren zuerst eine Mineralwollebahn (1) oder -matte hergestellt wird und die Bahn oder Matte zu einer Produktionsstrecke geführt wird, wo von ihr in einer Schneidestufe schmale Lamellenteile (2) längs abgeschnitten werden, wobei das Schneiden zwischen mindestens zwei benachbarten Lamellenteilen teilweise ausgeführt wird, so dass die mindestens zwei benachbarten Lamellenteile durch einen schmalen Hals miteinander verbunden bleiben, wobei die verbundenen Lamellenteile dann von einem Beförderungsteil zu einer Verpackungsstufe befördert werden, wobei der Beförderungsteil Beförderungsmittel umfasst und in der Schneidestufe das teilweise Schneiden zwischen mindestens zwei benachbarten Lamellenteilen derart ausgeführt wird, dass die verbundenen Lamellenteile eine Lamelleneinheit bilden, und die verpackten Lamellen nachfolgend zur Gebrauchsstelle befördert werden, **dadurch gekennzeichnet, dass**
die Fasern der Bahn oder Matte hauptsächlich parallel zu den Hauptoberflächen der Bahn liegen,
die Lamellenteile in der Breite der gewünschten Isolationsdicke entsprechen,
die Lamellen an der Gebrauchsstelle im Verhältnis zur Ebene, die durch die Bahn oder Matte (1) bestimmt ist, um 90° gedreht installiert werden, so dass benachbart installierte Lamellen eine Isolationsschicht bilden, in der die Fasern im Wesentlichen senkrecht zu der Ebene liegen, die durch die Hauptoberflächen der Isolationsschicht gebildet wird,
die Beförderungsmittel (C1 bis C10) sich in der Längsrichtung der Produktionsstrecke in einem Querabstand zueinander erstrecken, die Breite der Lamelleneinheiten größer als der Querabstand zwischen zwei benachbarten Beförderungsmitteln (C1 bis C10) ist und die verbundenen Lamellenteile vor deren Verpackung vollständig voneinander gelöst oder bis kurz vor der Gebrauchsstelle nicht voneinander gelöst werden und an der Gebrauchsstelle einzeln installiert werden.

2. Verfahren nach Anspruch 1, **dadurch gekennzeichnet, dass** das Schneiden von Kreissägeblättern auf einer Antriebswelle ausgeführt wird, die sich quer zur Mineralwollebahn erstreckt, wobei die Blätter in Längsrichtung der Welle an verschiedene Punkte verlagert werden können.

3. Verfahren nach Anspruch 2, **dadurch gekennzeichnet, dass** die Einstellung der Tiefe für jeden Schnitt durch Verändern des Durchmessers des entsprechenden Blattes ausgeführt wird.

## Revendications

1. Procédé de production, de transport et d'installation de lamelles isolantes de laine minérale, dans lequel procédé il est d'abord produit une feuille ou natte de laine minérale (1) et la feuille ou natte est acheminée à une chaîne de production où, à un stade de coupe, des parties en lamelles étroites (2) sont découpées longitudinalement, la coupe entre au moins deux parties en lamelles adjacentes est réalisée partiellement de manière à ce que lesdites au moins deux parties en lamelles adjacentes restent attachées l'une à l'autre par un fin collet, lesquelles parties en lamelles attachées étant ensuite acheminées vers un stade d'emballage par un élément de convoyage, l'élément de convoyage comprenant des moyens de convoyage et, au stade de coupe, la coupe partielle entre au moins deux parties en lamelles adjacentes étant réalisée de manière à ce que les parties en lamelles attachées forment une unité à lamelles et les lamelles emballées étant ensuite acheminées vers le site d'utilisation, **caractérisé en ce que**
les fibres de la feuille ou natte sont majoritairement parallèles aux surfaces principales de la feuille ;
les parties en lamelles correspondent en largeur à l'épaisseur d'isolation souhaitée ;
les lamelles sont installées sur le site d'utilisation en les tournant de 90° par rapport au plan déterminé par la feuille ou natte (1) de manière à ce que les lamelles installées en contiguïté forment une couche isolante dans laquelle les fibres se situent majoritairement à la perpendiculaire du plan formé par les surfaces principales de la couche isolante ;
les moyens de convoyage (C1 - C10) s'étendant dans le sens longitudinal de la chaîne de production à distance transversale l'un de l'autre ; la largeur des unités à lamelles étant supérieure à la distance transversale entre deux moyens de convoyage adjacents (C1 - C10) et les parties en lamelles attachées étant détachées complètement les unes des autres avant de les emballer ou pas avant qu'elles soient proches du site d'utilisation et étant installées sur place individuellement sur le site d'utilisation.

2. Procédé selon la revendication 1, **caractérisé en ce que** la coupe est réalisée par des lames de scie circulaires sur un arbre moteur s'étendant à la transversale de la feuille de laine minérale, les lames étant positionnables à différents points dans le sens longitudinal de l'arbre.

3. Procédé selon la revendication 2, **caractérisé en ce que** le réglage de la profondeur de chaque coupe est effectué en changeant le diamètre de la lame correspondante.
